Europäisches Patentamt

European Patent Office

Office européen des brevets

(19)

(11) Publication number: **0 208 458**
A2

(12) # EUROPEAN PATENT APPLICATION

(21) Application number: **86304841.9**

(22) Date of filing: **24.06.86**

(51) Int. Cl.⁴: **G 06 F 7/00**

(30) Priority: **10.07.85 GB 8517498**

(43) Date of publication of application:
**14.01.87 Bulletin 87/3**

(84) Designated Contracting States:
**DE FR NL**

(71) Applicant: NATIONAL RESEARCH DEVELOPMENT
CORPORATION
101 Newington Causeway
London SE1 6BU(GB)

(72) Inventor: Jesshope, Christopher Roger Dept. of
Electronics
University of Southampton
Southampton SO9 5NH(GB)

(72) Inventor: Rushton, Andrew John Dept. of Electronics
University of Southampton
Southampton SO9 5NH(GB)

(74) Representative: Pears, David Ashley et al,
REDDIE & GROSE 1ᶜ Theobalds Road
London WC1X 8PL(GB)

(54) A data stack for data processors.

(57) A data stack 110 comprises a shift register 112 having an input terminal at one end, constituting an input terminal 114 of the stack for receiving input words in bit-serial form, and an output terminal at the other end constituting an output terminal 116 of the stack for providing output words in bit-serial form.

The stack further comprises a RAM 118 providing bulk storage. Data words can be transferred in parallel between the RAM 118 and the shift register 112. Control means 122, including an address pointer circuit for addressing the RAM, controls the data transfer so that data words are read out of the stack in the reverse of the order in which they were read in, and with bits in the same order as they were read in.

In another embodiment, bulk storage is provided by shift registers connected by a switch network which allows data movement so that words are read out in the reverse of the order in which they were read in, but with the same order of bits.

FIG. 1

EP 0 208 458 A2

0208458

of a stack for a bit-serial processor such as the processing element described in British patent application no. 8517376.

A bit-serial processor combines operands by a series of operations performed one after the other on respective, corresponding bits of the operands. The least significant bits are normally processed first, so that in arithmetic operations for instance, a carry bit can be retained for use in the next operation, on the bit of next highest significance. The result of each operation may be pushed onto a stack. At the end of the sequence, the complete result has been stored on the stack.

However, because data is popped and pushed in reverse order, the result cannot immediately be used for further bit-serial processing, because the first bit popped will be the most significant bit, whereas the least significant bit is required first.

The problem can be overcome by popping the result, a bit at a time, and pushing it onto another stack. The result is thus stored on the second stack with the least significant bit at the top, and so is available for further processing.

This additional set of pushing and popping operations, while simple to effect, takes up valuable processor time and increases hardware complexity. When repeated many times during complex operations, the additional time spent reordering data on stacks causes a significant and undesirable decrease in the speed of the processor. For instance, the time taken to perform even a simple addition is doubled.

Alternatively, the problem could be overcome by using RAM for all memory. Recent designs of processing elements for processor arrays have used RAM integrated with the rest of the element onto a single silicon chip, or external, standard RAM chips. The latter allows higher scales of integration of the elements, and allows memory to be upgraded as technology develops. However, an increase in chip-to-chip communication is required. Furthermore, RAM address buses are needed, but the width of control buses in the processing elements is required to be minimised, in the interests of increased integration.

Other processing elements use on-chip stacks to reduce the need for address buses, but the problem of data reordering is then encountered.

It is an object of the present invention to provide a data stack which can be used with bit-serial processors without processing speed being reduced by the need to re-order data.

A data stack according to the present invention is characterised in that the input terminal constitutes an input terminal of the stack for receiving input words in bit-serial form, the output terminal constitutes an output terminal of the stack for providing output words in bit-serial form, and by the stack further comprising bulk storage means operable to store input words transferred from the shift register and to provide stored words for transfer to the shift register for output, and control means operable so to control data transfer as to provide words for output sequentially in the reverse of the order in which they were read in, and to provide the bits of each word for output in the same order as they were read in.

In a preferred embodiment, the bulk storage means comprises a RAM. This enables the versatility of RAM storage to be used without the associated requirement of complex control connections to the device using the stack. Data transfer to the RAM and control of the RAM are internal operations of the stack.

Other preferred features of the invention are defined in the subsidiary claims set out below.

A stack according to the invention preserves the above-mentioned characteristic of a stack, in that data words are popped and pushed in reverse order, but the bits of any one word are pushed and popped in the same order. Accordingly, reordering of the bits of a word is not required during bit-serial processing. drawings, in which:

Two embodiments of the invention will now be described in more detail, by way of example, and with reference to the accompanying drawings, in which:

Fig. 1 is a schematic block diagram of a first embodiment of the invention;

Fig. 2 shows the input circuit of Fig. 1 in more detail;

Fig. 3 is a block diagram of a second data stack according to the invention;

Figs. 4a to 4d show some of the modes of using the stack of Fig.3;

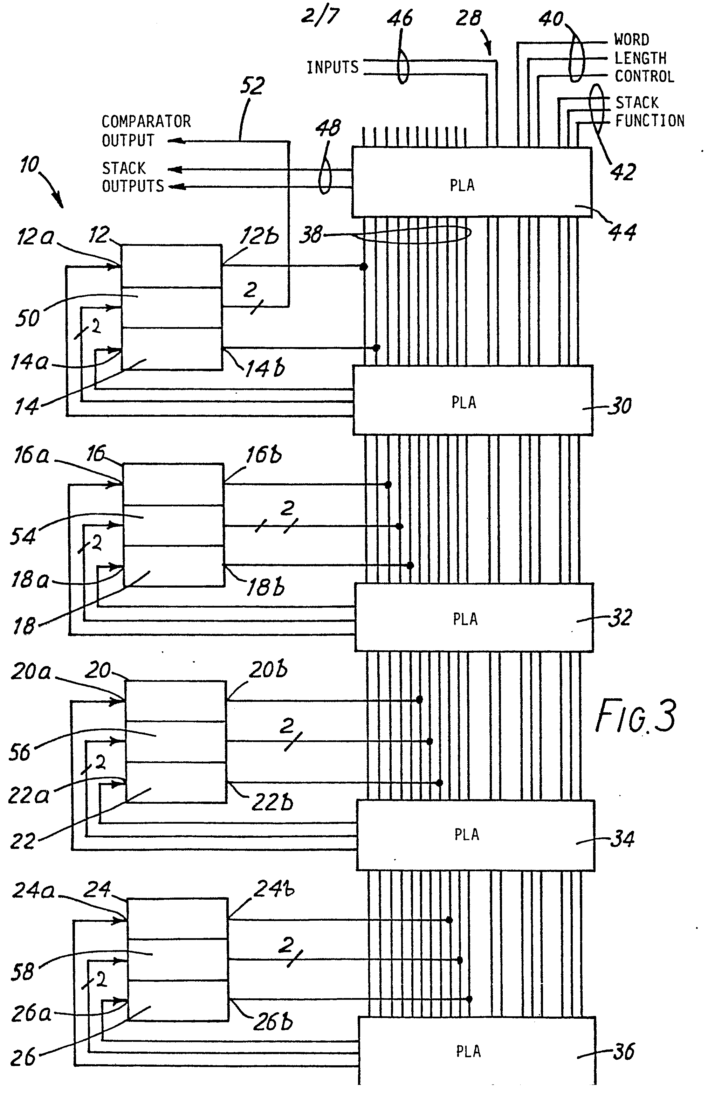

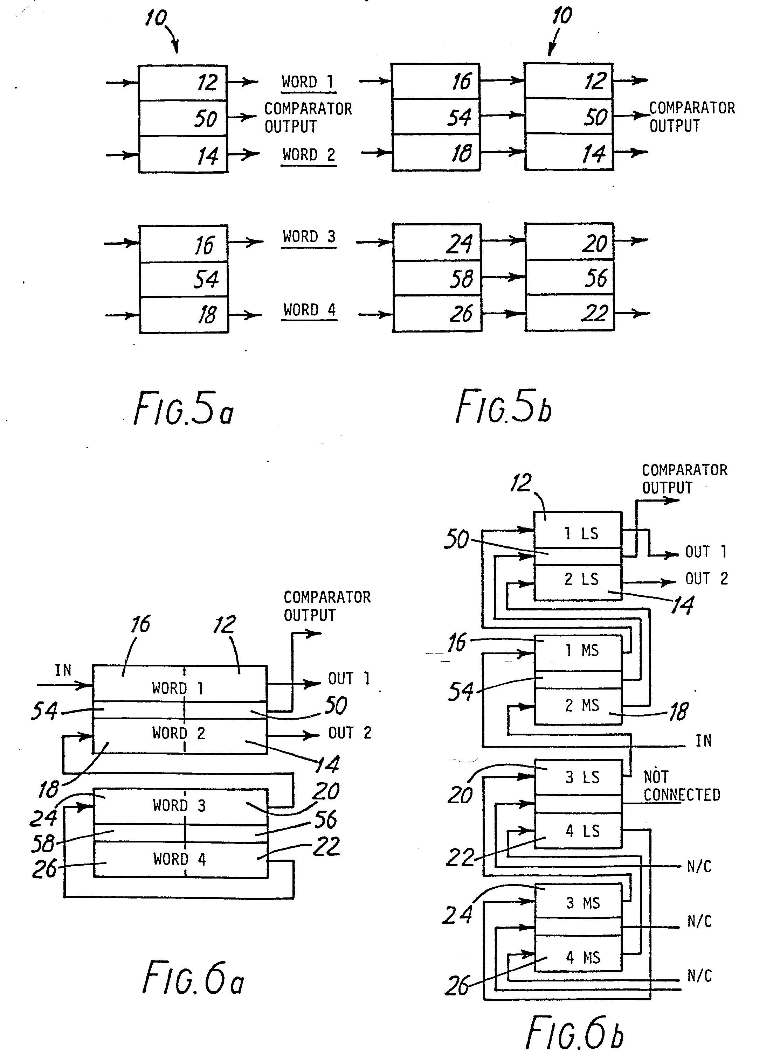

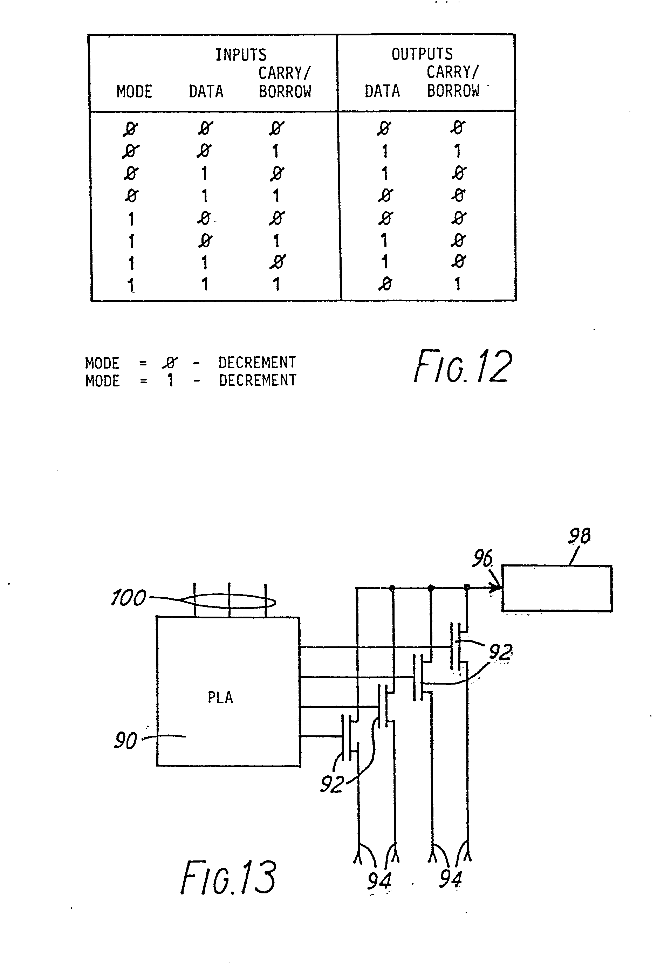

Figs, 5a, 5b, 6a and 6b show how the stack of Fig. 3 can be used for words longer than the shift register length;

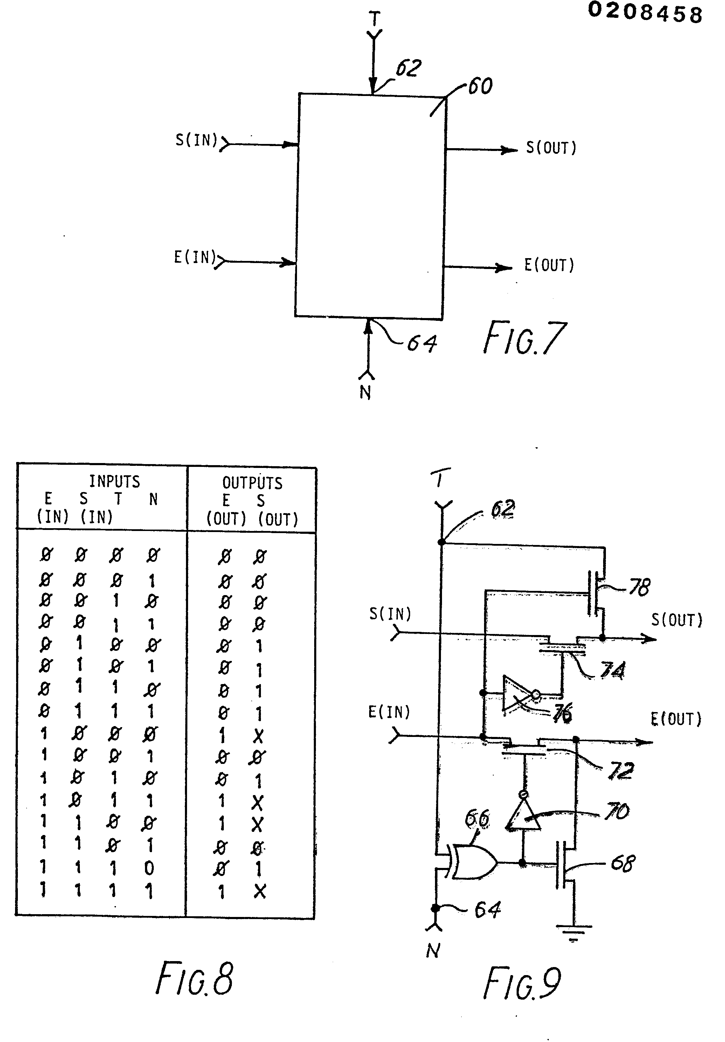

Fig. 7 shows the inputs and outputs to and from a comparator block for use in the stack;

Fig. 8 is the truth table of the block shown in Fig. 7;

Fig. 9 is a diagram of a possible circuit for the block of Fig. 7;

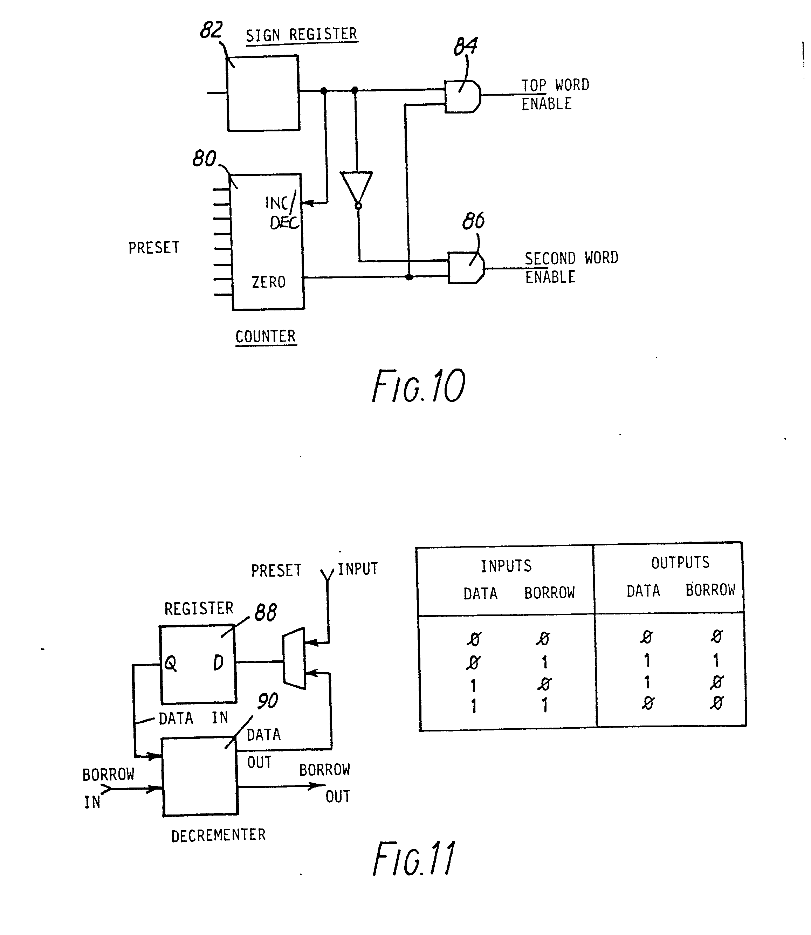

Fig. 10 shows circuitry for aligning data words on the stack;

Fig. 11 is a block diagram of the circuit for one bit of a counter for the alignment circuitry of Fig 10;

Fig. 12 shows the truth table for an alternative form of counter; and

Fig. 13 shows a programmable logic array like those shown in Fig.3, being used to control inputs to a shift register.

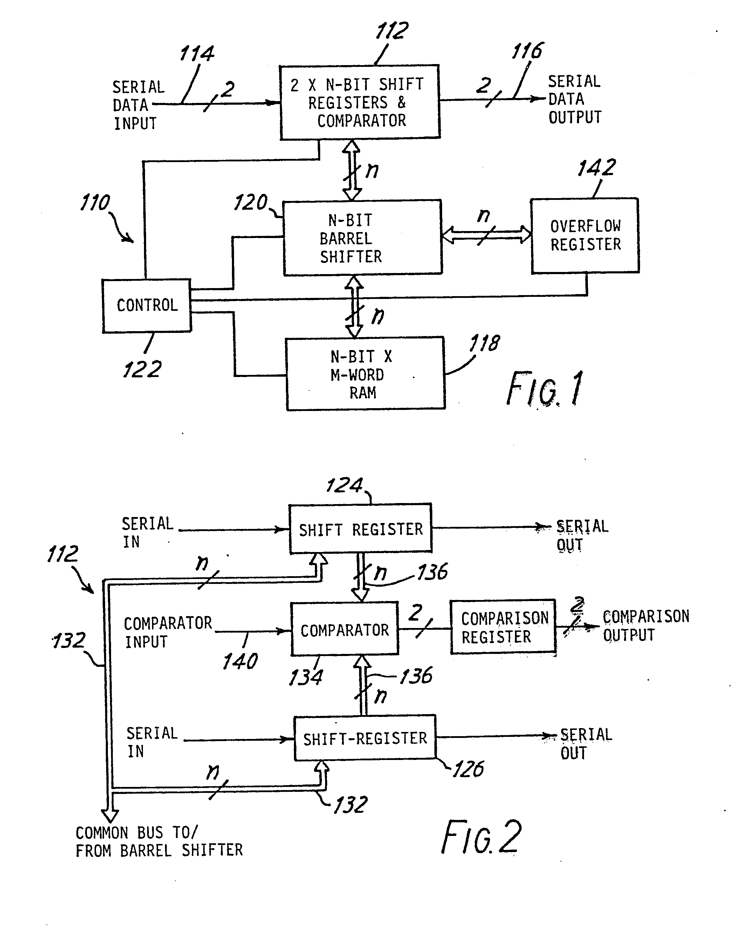

Fig. 1 shows a data stack 110 for data words, comprising a shift register which forms part of an input circuit 112. The shift register has at one end an input constituting an input terminal of the stack 110 (one of the pathways of the two bit wide bus 114) for receiving input words in bit-serial form, and an output terminal at the other end constituting an output terminal of the stack (one of the pathways of the two bit wide bus 116) for providing output words in bit-serial form. The stack further comprises bulk storage means in the form of a RAM 118 operable to store input words transferred from the shift register of the circuit 112, and to provide stored words for transfer to the shift register for output. Transfer takes place through a barrel shifter 120 to be described. Control means 122 are operable so to control data transfer as to provide words for output sequentially in the reverse of the order in which they were read in, and to provide the bits of each word for output in the same order as they were read in.

The internal structure of the circuit 112 is shown in Fig. 2. In the embodiment shown, the circuit 112 comprises two n-bit shift registers 124, 126 each having an input terminal 128 at one end and an output terminal 130 at the other end. Pathways to and from these

0208458

terminals constitute the buses 114, 116.

A n-bit wide bus 132 connects each shift register 124, 126 to the barrel shifter 120 and connects the shift registers together. The buses 132 allow data to be transferred in parallel from the shift registers to the barrel shifter.

The circuit 112 further comprises a digital comparator 134 for comparing the contents of the shift registers 124, 126. These contents are received in parallel over two n-bit wide buses 136, having been loaded either over the input bus 114 or from the RAM 118. The result of a comparison is supplied to a comparison register 138 and can be supplied by the register 138 as an additional ouput of the circuit 112. The structure and operation of a suitable comparator circuit are described below, in connection with the second embodiment to be described.

Composite data words longer than the shift registers 124, 126 can be compared in a sequence of operations. They are broken down into component words of the same length as the shift registers 124, 126. The component words are loaded one by one into the registers beginning with the component word of greatest significance. The result of each comparison is fed back to the comparator input 140 to be taken into account in the next comparison step. Eventually, when the component words of least significance have been compared, the final output of the comparator is produced, representing the result of comparison of the complete composite words.

Operation of the stack 110 in pushing and popping data words will now be described when the barrel shifter is inoperative, so that data words are transferred without interference between the shift registers 124, 126 and the RAM 118.

A data word to be pushed into the stack is serially read into one of the shift registers 124, 126. When the shift register is full, the control circuit 122 commands the contents to be transferred, in parallel, to the RAM. The RAM is arranged as an array of m words each of n bits. One word can be specified by an address which is the value of m. The address in the RAM to which the word is sent is determined by an address pointer circuit within the control circuit 122. Once transfer of the newly pushed word is complete, the address pointer circuit increments the RAM address indicated, so that a series of words will be read into a series of consecutive RAM locations.

In order to pop data already stored in the stack, the control circuit commands the transfer of a data word at the location indicated by the address pointer circuit to one or other of the shift registers 124, 126. Once transferred, the word can be read bit-serially out of the shift register, on the bus 116.

Upon completion of the pop operation, the address pointer decrements the indicated address. Thus, the operation of the address pointer circuit ensures that data words are popped in the reverse of the order in which they were pushed. The nature of the shift registers and the location of their inputs and outputs ensure that the bits of each word are popped in the same order as they were pushed.

It is convenient in some situations to allow composite words longer than the shift registers 124, 126 to be pushed and popped. This can be achieved by a slight modification of the operation of the address pointer circuit, and by breaking the composite word into component words of the same length as the shift registers.

To push a composite word, a shift register is loaded with the component word of lowest significance. This is transferred in the normal way to the RAM, and the address pointer circuit increments the address. The remaining component words are then loaded as transferred in the same manner, the address being incremented at each transfer.

To pop a composite word, the address pointer initially selects the address containing the component word of lowest significance. Since this word was the first to be read in, it should be the first to be read out). This word is transferred to a shift register and read out. At this transfer, the address is not decremented, as in the case of popping words of the same length as the shift register. The address is incremented, to indicate the location of the component word of next highest significance. This process of address incrementation continues until the whole composite word has been popped off the stack.

In some circumstances, it may be convenient if the operation of the address pointer circuit can be overridden, so that the indicated address can be set externally, or disabled. This would enable the device to be much more versatile in operation.

The function of the barrel shifter 120 is to shift the significance of bits of words being transferred between the shift registers 124, 126 and the RAM 118. Words being transferred arrive at the barrel shifter in parallel, on an n-bit bus, and are passed on to an n-bit bus to complete the transfer. The barrel shifter comprises switch circuits which allow the n pathways of one bus to be connected to the respective, corresponding pathways of the other bus, or to respective pathways displaced in significance. Thus, if required, the pathway carrying data of lowest significance in one bus (the "lowest significance pathway") can be connected to the next to lowest significance pathway of the other bus. In this sense, there has been a one bit displacement of significance. The remaining pathways of the first bus are connected in ascending order of significance to the remaining pathways of the second bus, in ascending order of their significance. Thus, each bit being transferred is initially sent over a pathway which gives that bit a first significance, but arrives at its destination on a pathway which gives it a second, higher significance, so that the significance of the bits of the word have been shifted.

The barrel shifter preferably includes circuits which enable a shift of any number of bits up to n-bits to be executed, and enable shifts in either sense to be executed. The shift provided is set by the control circuit 122.

Whenever shifting occurs one or more of the pathways on which data arrives at the barrel shifter 120 will not be connected for onward transmission of data. In these cases, data on the unconnected lines is stored in an overflow register 142. The overflow data can be taken into account in a subsequent transfer. For instance, if composite words are being transferred, bits can be shifted out of one component word and into another, by storing them in the overflow register for inclusion in the appropriate place in the component word into which they have been shifted.

The control circuit 122 can reset or disable the overflow register 142 if any overflow is to be ignored.

The arrangement of buses in the embodiment just described

allows various data movements to be executed, which can be summarised as follows. Data can be read serially into or out of the shift registers, alone or together. The bus 132 allows the contents of one register to be transferred to the other register. The bits contained in one or other register (but not both) can be transferred in parallel to the RAM (possibly with shifting provided by the barrel shifter). A word can be transferred, with the bits in parallel, from the RAM to one or other shift register (possibly undergoing shifting).

A second embodiment uses bulk storage means in the form of interconnected shift registers, and will now be described.

The stack 10 (Fig. 3) comprises eight shift registers 12, 14, 16, 18, 20, 22, 24, 26. Each shift register has an input terminal at one end and an output terminal at the other end, indicated by the numeral applied to the register, with the suffixes a and b respectively. The shift registers all have the same length, which here is eight bits.

A connection network 28 provides connections between the input and output terminals 12a, 12b, 14a, 14b etc of the shift registers 12, 14 etc. Control means in the form of switching circuits 30, 32, 34, 36 enable and disable the connections between the shift register inputs and outputs. In Fig 3, each shift register represents a respective position in the stack, and so when two registers are connected, that is, the connection between them is enabled, data may pass from one to the other and so move up or down the stack.

More specifically, each shift register output 12b etc is connected to a respective line in an 11-bit wide data bus 38. The shift register inputs 12a etc are connected to the lines of the bus 38 through the switching circuits 30, 32, 34, 36. The switching circuits are controlled over two 3-bit wide control buses 40, 42 to make and break connections according to the data movements required, as will be described more fully below.

A further switching circuit 44 provides connections between the bus 38 and the stack inputs 46 and outputs 48, also under the control of instructions sent over the buses 40, 42.

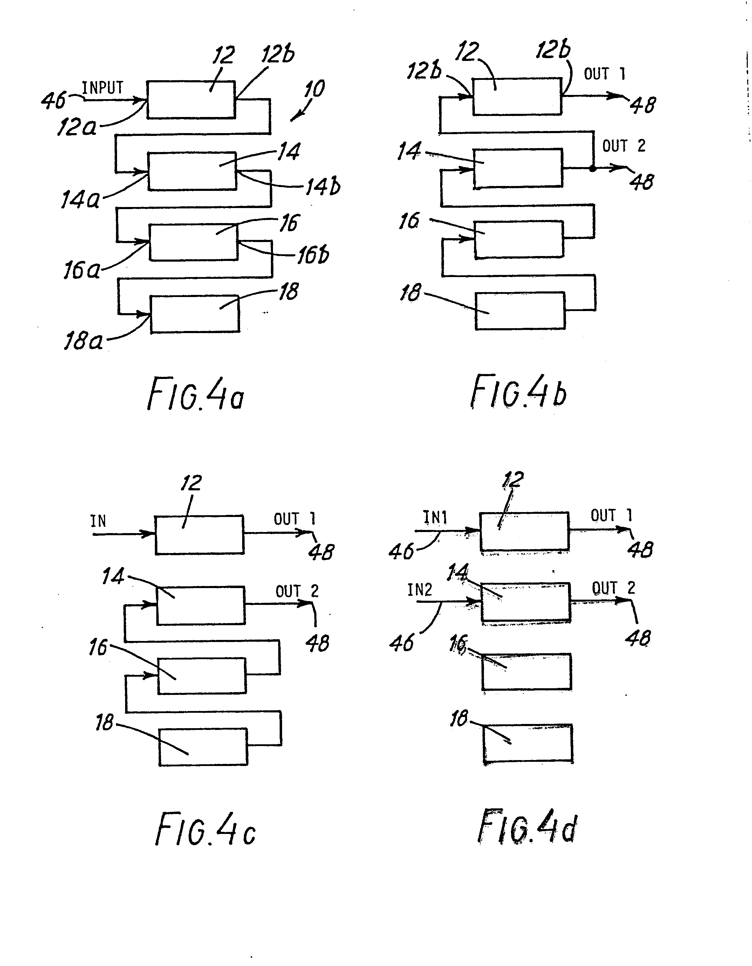

Some of the modes of operation of the stack are shown in Figs 4a to 4d. In these figures, only enabled connections are indicated.

Fig 2a shows the connections made for a push operation, in which a new eight-bit data word arrives at the stack input for storage at the top of the stack 10. The new word is read, bit by bit, into the top shift register 12. Simultaneously, the present contents of all of the registers 12 etc are read, bit by bit, into the next lower register, and thereby move down the stack.

At the end of the push operation, the newly stored word is contained in the top register 12. The bit which was pushed first is stored in the shift register element nearest the output 12b, and the bit which was pushed last is stored in the shfit register element nearest the input 12a.

Similarly, the word originally stored in the top register 12 is stored in the same order in the second register 14, at the end of the push operation. The preservation of order is a consequence of the shift register inputs and outputs being at opposite ends of the registers, and the equality of shift register and word length.

Thus, after the push operation, the newly stored word is available to be popped from the top register 12, as shown in Fig 4b. No reordering of the bits is required after popping. For the pop operation shown in Fig 4b, the output 12b is connected to a stack output 48. The top register input 12a is connected to the register output 14b. The remaining shift register inputs are connected to the outputs of the shift registers next below. Consequently, this operation results in each word in the stack moving up one place, thereby displacing the top word which is popped.

The output 14b of the second register 14 is additionally connected to a second stack output 48, so that the top two words on the stack are simultaneously popped. It has been found convenient to be able to pop two words together, principally because two operands are always required for arithmetic operations. However, in some circumstances it may not be necessary to provide two outputs.

The ability of a shift register to read in data at one end while simultaneously reading data out at the other can be utilised in another way, as shown in Fig 4c. In this figure, the top two words are popped, while one word is pushed into the top register 12. With appropriate connections outside the stack, this arrangement allows the simultaneous popping of two operands and pushing of the result of the operation performed on them. The vacancy caused by popping two words and pushing one is filled by moving the third and lower words on the stack up by one place. No connection is needed between the registers 12 and 14.

The vacancy can alternatively be filled by using a second stack input to push another word into the second register 14. The necessary connections are shown in Fig 4d. The top two words are popped through respective outputs 48 while two replacement words are pushed through respective inputs 46. Thus it is possible with this arrangement to push two operands and combine them bit-serially to produce a result which is pushed simultaneously with a word coming from other memory, such as a RAM.

In Fig 4d, no vacancies are created and so no connections to the third and lower registers 16 etc, are necessary.

A stack as so far described is applicable to a wide range of situations. However, if the type of processing for which the stack is to be used is known, it may be convenient to incorporate additional facilities in the stack. The embodiment being described incorporates two such facilities, intended to speed up floating point arithmetic, such as might be performed by a processing element described in the patent application referred to above.

The first of these facilities is the provision of a comparator circuit. Returning to Fig 3, a comparator circuit 50 is provided between the top pairs of shift registers 12, 14. The comparator 50 is hard-wired between the registers 12, 14 and its function is to compare the contents of the registers, returning one of three results, indicating whether the words are identical, whether the top word is the larger or whether the bottom word is the larger. The comparison is assumed to be between two unsigned integers, and so is also suitable for unsigned floating point numbers. Sign-magnitude numbers (including a bit indicating the sign of the number) and signed floating-point numbers can be compared if the normal sign convention is reversed, so that a zero bit indicates a negative number and a one bit indicates a positive number. (In many applications the sign bit would be separately treated elsewhere, and so this reversal of convention would be unnecessary).

The purpose of the comparator circuit is to compare the magnitudes of the top two words so that when subtraction is to be performed, the smaller word can be chosen as the subtrahend. This avoids the need to perform a 2's complement conversion on a negative result, in order to restore the result to sign-magnitude form.

The output of the comparator 50 is available at 52 to the processor using the stack.

A stack as so far described is only capable of handling eight-bit words. Longer or shorter words would be broken up as they move up and down the stack. Eight-bit words are very common, and so a stack limited in this way would have practical use. However, some important applications use other, longer word lengths, as shown in the table below.

| Word Length (bits) | Applications |
| --- | --- |
| 8 | ASCII character<br>single-precision integer.<br>single-precision floating-point exponent |
| 11 | single-extended floating-point exponent<br>double-precision floating-point exponent |
| 16 | double-precision integer. |
| 24 | single-precision floating-point significand |
| 32 | quad-precision integer<br>single-precision floating-point number<br>single-extended floating-point significand |
| 53 | double-precision floating-point significand |
| 64 | double-precision floating-point number |

The stack 10 is made more versatile by constructing the connection network 28 so that the shift registers 12, 14, etc can be connected to form composite shift registers, having a length which is a multiple of eight bits. The composite shift registers can then be used in the same ways as shown in Figs 4a to 4d, but to handle the larger words.

In order to retain the comparator facility when using composite shift registers, further comparator circuits 54, 56, 58 are provided, so that each pair of shift registers has an associated comparator circuit. The comparator circuits can be connected together to form composite comparator circuits associated with a pair of composite shift registers.

The stack 10 is shown in Figs 5a and 5b configured to accommodate 8-bit and 16-bit words respectively. In Fig 5a, the registers 12, 14, 16, 18 etc hold the top, second, third, fourth etc words on the stack, respectively, as described above. Only the comparator circuit 50, between the registers 12 and 14, is in use.

In Fig 5b, the top (sixteen-bit) word is stored in a composite shift register formed by two registers 12, 16. These are the top and third registers as seen in Fig 5a. The least significant half of the word is stored in the top register 12.

The second word is stored in a composite register formed by another two registers 14, 18. These are the second and fourth registers as seen in Fig 3a. The least significant half of the word is stored in the second register 14.

The registers forming the composite registers are chosen to be interleaved in this fashion so that the comparator circuits 50, 54 can be connected to form a composite comparator circuit comparing the top two sixteen bit words on the stack. The comparator circuit 50 is hard-wired to compare the contents of registers 12 and 14, and so compares the least significant halves of the words. The comparator 54 compares the most significant halves, and its output is supplied to the comparator circuit 50. The output of the circuit 50 takes account of the contents of the registers 12, 14 and the input from the circuit 54 to indicate if the sixteen-bit words are equal, and if not, which is the larger.

The interleaving of registers provides a further advantage. If the configuration of the stack is changed from that of Fig 5b to that of Fig 5a (by enabling and disabling the appropriate connections) the two halves of each sixteen bit word on the stack become separated and are treated thereafter as unrelated words. This reconfiguration can be used to separate the exponents and significands of floating-point numbers, for subsequent separate processing.

Figs 6a and 6b shows the stack performing on sixteen-bit words the operations shown in Fig 4c, in which two words are popped and one is pushed. Fig 6a is equivalent to Fig 4c, redrawn to show the use of 16-bit composite shift registers in place of 8-bit shift registers, and to show the composite comparator circuit. Fig 6(a) is also equivalent to the arrangement shown in Fig 6(b) which is a simplified version of Fig 3 showing only those connections which are enabled. In Fig 6b, each shift register is labelled to show its contents, in the following way. A single digit indicates which word on the stack is partially stored in the register, the words being counted from the top of the stack. The letters LS or MS indicate that the least significant or most significant half, respectively, of the word is being stored.

Figs 7, 8, and 9 show the comparator circuits and their operation in more detail. These circuits can also be used in the embodiment of Figs. 1 and 2. Each comparator circuit comprises eight blocks 60 having the inputs and outputs shown in Fig 7. Each block 60 receives two corresponding bits for comparison from the associated shift registers (or composite shift registes) at two inputs 62, 64, and receives two input bits S(IN) and E(IN) from the block comparing the bits of next highest significance, if any. E(IN) for the circuit comparing the most significant bits is set high. Two outputs S(OUT) and E(OUT) are provided to the block comparing the bits of next lowest significance, if any, or as the final comparator output if none.

A comparison begins at the most significant end of a word and propogates along the chain of blocks 60, towards the least significant end. At each stage, E(IN) indicates whether or not the words have been equal so far. If so, E(IN) = 1, if not, E(IN) = 0. Once inequality has been found, the S(IN) value indicates whether the top word is the larger (S(IN) = 1) or the second word is the larger (S(IN) = 0).

Once inequality has been found, the E(IN) and S(IN) values can be passed on unchanged by each block, because the most significant bit is tested first.

Fig 8 shows the truth table required for the circuit of the block 60. 'X' indicates a signal with no significance.

- 14 -

Fig 9 shows a possible circuit for implementing the truth table of Fig 8. An exclusive-or gate 66 receives the bits to be compared and provides its output to the gate of a field effect transistor (FET) 68 and, through an inverter 70, to the gate of an FET 72. If the inputs to the gate 66 are equal, the FET 72 conducts, so passing on the E(IN) signal (whether high or low) as E(OUT). If the inputs differ, the FET 68 earths the E(OUT) line, setting E(OUT) to zero.

E(IN) is also applied to an FET 74 through an inverter 76, and directly to an FET 78. If E(IN) = 0, signifying earlier detection of inequality, the inverter 76 and the FET 74 pass S(IN) through as S(OUT). When E(IN) =1, the FET passes T as S(OUT), because when E(IN) = 1, S(OUT) is equal to the input 62 or is irrelevant, as can be seen from Fig 6.

A composite comparator circuit is made simply by providing S(OUT) and E(OUT) from the final block 60 of one comparator circuit as the inputs S(IN) and E(IN) to the first block 60 of another comparator circuit.

If a comparator circuit of this design is found in practice to be too slow, a circuit which makes comparison of the bits in parallel could be used.

The stack further comprises hardware for performing a second function on the stack contents, in addition to comparison. The second function serves to align the corresponding bits of two words held in floating-point form in the top two stack positions. The procedure used is to subtract (by 2's complement subtraction) the exponent of the top word from the exponent of the second word and to shift the significand of the lower exponent towards its least significant bit. The significand is shifted by the same number of bits as the magnitude of the exponent difference. If the words are long enough, the significands can be isolated from the exponents by reconfiguring the stack, as described above.

Fig 10 shows circuitry for performing alignment, which can be used in either embodiment.

A counter 80 receives the magnitude of the exponent difference as an input to set the initial value of the counter. The sign of the magnitude difference is stored in a sign register 82 and provided to the counter 80 to control the counter to increment or decrement on each clock cycle. The contents of the sign register are also
applied to an AND gate 84 and, after inversion, to an AND gate 86.
The outputs of the gates enable the registers containing the
significands of the top two words for shifting the significands by
one bit on each clock cycle.

The other inputs to the gates 84, 86 are the output of
the counter 80. The counter output is high until the count reaches
zero. Thus, one or other word, chosen by the contents of the
register 82, is shifted a number of times equal to the magnitude of
the exponent difference.

If the exponent subtraction is performed as a sign-magnitude
subtraction, using the comparator circuit output to select the
subtrahend, the counter 80 can be a simple decrementing counter,
and no input from the register 82 is required.

Simple additional circuitry is used to disable the counter on
reaching zero, to prevent subsequent re-enabling of the registers
for alignment shifting.

During the alignment process, the stack is used to pop two
words and push two words as shown in Fig 4d (although one of the top
two registers is disabled). Zeroes are used as inputs, and the
output is discarded.

Although exponent differences greater than the word length are
possible, it is only necessary to shift data by a maximum of one
word length. Thus the maximum time required for alignment is the
same as the time required to pop one word.

A decrementing circuit for use as one bit in the alignment
counter is shown in Fig 11, along with its truth table.

Only a five bit counter is needed. This can align bits up to
31 places apart, which is the maximum alignment not yielding a zero
significand when using a 32-bit word. The stack described cannot
hold more than one word longer than 32 bits.

The circuit of Fig 11 comprises a register 88 into which one bit
of the exponent difference magnitude is loaded. The decrementer 90
takes as inputs the contents of the register 88 and a bit labelled
"borrow in" from the next least significant decrementing circuit.
The outputs to the register 88 and the next most significant
decrementing circuit are selected according to the truth table in Fig 11. The "Borrow in" to the least significant decrementing circuit is held high until counting is to stop. This signal can be the output of a five input NOR having the counter register contents as inputs, or a logically equivalent circuit.

If incrementing and decrementing are required, the circuit can be similar to Fig 11, but must take account of an extra input which instructs incrementing or decrementing. A suitable truth table is Fig 12.

The switching circuits 30, 32, 34, 36 and 44 of Fig 3 can be programmable logic arrays (PLAs) such as those described in "Introduction to MOS LSI design" by J Mavor, M A Jack and P B Denyer (Addison Wesley, 1983), which take control inputs and provide outputs to control switch transistors.

One PLA 90 is shown in Fig 13, controlling four FET 92 to select one of four lines 94 for connection to the input 96 of a shift register 98. One FET 92 is turned on. The remainder are turned off. The selection is controlled by binary codes on the PLA inputs 100, decoded by the PLA.

Table A1, given in the Appendix, shows the selection equations for the PLAs of Fig 3, with the following notation. The column headed "Register" shows the numeral of the registers as used in Fig 3. The column labelled "Data Source" shows the selected source of data for the corresponding shift register. D1 and D2 denote the two stack inputs, the two digit numbers represent the output of other shift registers, again by the numerals of Fig 1, 'X' denotes that no connection is required, and '0' denotes a logic zero input.

Corresponding to each data source shown in the second column is a logical expression shown in the column headed "Selection Equation". In this column, the digits 1 to 8 denote the word length being handled, in multiples of eight bits. 'A' denotes that the stack is disabled. 'B' denotes popping as shown in Fig 4b. 'C' denotes popping of two words and pushing of one, as shown in Fig 4c. 'D' denotes popping of two words and pushing of two words, as shown in Fig 4d. 'E' denotes pushing as shown in Fig 4a. As is normal in logical expressions of this sort, "+" has the logical meaning "or"; logical "and" is shown by "multiplication" of elements.

Thus, the top line of the table has the following meaning. PLA

0208458

30 connects the input of register 12 to the line connected to the input D1 (labelled IN1 in Fig 4d) during any stack operation on 8-bit words and involving a push. Alternatively, the third line shows that the PLA 30 selects the output of shift register 16 as the input of the register 12, if the word length is 16 bits or more and the stack is performing any operation (i.e. is not disabled).

Table A2 shows the selection functions for enabling connections between the comparator circuits. The comparator circuits are designated in the left hand column by the numerals of Fig 3. The possible data sources are preset values ('P') (E(IN) and S(IN)) for most significant bits, or the output of other comparator circuits (indicated by numerals). 'X' indicates that no connection is required. The selection functions are expressed in terms of the word length, coded as in Table A1.

Table A3 shows the selection functions for enabling the shift registers to shift their contents, for alignment, popping or pushing operations. The symbolism of Table A1 is used, with the additional symbols 'T' and 'N'. These represent the outputs of the gates 84 and 86 respectively (see Fig 10). "T" and "N" are assumed high when alignment is not being effected.

Table A4 shows the selection functions for the PLA 44 for selecting the second stack output. (One output always comes from the shift register 12). It can be seen that if the word length is 40 bits or more (so that only one word can be accommodated in the stack) the second stack input is connected through to the second stack output.

Finally, Table A5 shows a possible coding of the stack function A to E as 3-bit numbers, sent to the PLAs over the three bit bus 42 (Fig 3). The bits are labelled "enable", F0 and F1, and this coding allows the stack to be disabled by changing only one bit ("enable").

The word length is encoded normally as a 3-bit word, with a length of 64 bits (8 x 8) being represented by 000. The three bits are sent to the PLAs on the three-bit bus 40 (Fig 3).

Although the use of PLAs is described above and shown in the drawings, other logic circuitry could be used, operating in accordance with the tables in the appendix. In particular, tailor-made rather than programmable logic circuitry could beused, and this may enable higher levels of integration to be achieved. The 11-bit bus 38 (Fig 3) can be replaced by individual connecting paths. Furthermore, although the stack described has connections between each shift register and every other register, not all of those connections are used in the modes of operation described. Thus, further savings of space on a chip can be made by omitting any connections not required in a particular application.

The choice of length for the shift registers 12 etc is made as a compromise between providing a high degree of flexibility without excessively complex routing logic and connections between the registers. Eight bits is believed to be a useful compromise for many purposes. Data words whose length is not a multiple of 8 bits can be padded to fit the stack by introducing dummy bits. The use of 8 registers provides a total capacity of 64 bits. This is sufficient for two single-precision floating point numbers.

An alternative circuit could use shift registers with a number of outputs at various points along their length, the output in use being selected by logic circuitry. Thus, different length words could be accommodated by varying the effective length of the shift registers, rather than by forming composite shift registers. A combination of the two approaches could be used.

Many alternative circuits which embody the invention are possible. In practice the final choice of circuit design will depend on factors such as the implementation technology and economy.

APPENDIX

TABLE A1

| Register | Data Source | Selection Equation |
|---|---|---|
| 12 | D1 | 1 (C+D+E) |
|  | 14 | 1B |
|  | 16 | (2+3+4+5+6+7+8) (B+C+D+E) |
|  | X | A |
| 14 | D1 | 5 (C+D+E) |
|  | D2 | 1D |
|  | 12 | 1E |
|  | 16 | 1 (C+B) |
|  | 18 | (2+3+4+6+7+8) (B+C+D+E) |
|  | 0 | 5B |
|  | X | A |
| 16 | D1 | 2 (C+D+E) |
|  | 14 | 1E + 2B |
|  | 18 | 1 (B+C) |
|  | 20 | (3+4+5+6+7+8) (B+C+D+E) |
|  | X | A + 1D |
| 18 | D1 | 6 (C+D+E) |
|  | D2 | 2D |
|  | 12 | 2E |
|  | 16 | 1E |
|  | 20 | (1+2) (B+C) |
|  | 22 | (3+4+7+8) (B+C+D+E) |
|  | 0 | 6B |
|  | X | A+1D+5 |
| 20 | D1 | 3 (C+D+E) |
|  | 14 | 3B |
|  | 18 | 1E |
|  | 22 | 1 (B+C) |
|  | 24 | 2 (B+C+E) + (4+5+6+7+8) (B+C+D+E) |
|  | X | A + (1+2)D |
| 22 | D1 | 7 (C+D+E) |
|  | D2 | 3D |
|  | 12 | 3E |
|  | 20 | 1E |
|  | 24 | 1 (B+C) |
|  | 26 | 2 (B+ C+E) + (4+8) (B+C+D+E) |
|  | 0 | 7B + 3 (B+C) |
|  | X | A + (1+2)D + 5+6 |
| 24 | D1 | 4 (C+D+E) |
|  | 14 | 2E+4B+ (5+6+7+8) (B+C+D+E) |
|  | 22 | 1E+2 (B+C) |
|  | 26 | 1 (B+C) |
|  | X | A+ (1+2) D+3 |

TABLE A1 (Contd)

0208458

| Register | Data Source | Selection Equation |
|---|---|---|
| 26 | D1 | 8 (C+D+E) |
| | D2 | 4D |
| | 12 | 4E |
| | 20 | 2E |
| | 24 | 1E |
| | 0 | (1+2+4) (B+C) +8B |
| | X | A+(1+2) D+ 3+5+6+7 |

0208458

## TABLE A2

| Comparator Circuit | Data Source | Selection Function |
|---|---|---|
| 50 | P | 1 |
|    | 54 | 2+3+4 |
|    | X | 5+6+7+8 |
| 54 | P | 2 |
|    | 56 | 3+4 |
|    | X | 1+5+6+7+8 |
| 56 | P | 3 |
|    | 58 | 4 |
|    | X | 1+2+5+6+7+8 |
| 58 | P | 4 |
|    | X | 1+2+3+5+6+7+8 |

## TABLE A3

| Byte | Selection Function |
|---|---|
| 12 | B+C+DT+E |
| 14 | B+C+D (T(5+6+7+8)+N(1+2+3+4)) +E |
| 16 | B+C+DT (2+3+4+5+6+7+8) +E |
| 18 | (B+C+E) (1+2+3+4+6+7+8) +D (T(6+7+8)+N(2+3+4)) |
| 20 | B+C+DT (3+4+5+6+7+8) +E |
| 22 | (B+C+E) (1+2+3+4+7+8) +D (T(7+8)+N(3+4)) |
| 24 | (B+C+E) (1+2+4+5+6+7+8) +DT (4+5+6+7+8) |
| 26 | (B+C+E) (1+2+4+8) +D (T8+N4) |

## TABLE A4

| Data Source | Selection Function |
|---|---|
| 14 | 1+2+3+4 |
| D2 | 5+6+7+8 |

- 22 -
<u>TABLE A5</u>

0208458

| Function Code Letter | Operation | Binary Representation | | |
|---|---|---|---|---|
| | | enable | F0 | F1 |
| A | None | 0 | X | X |
| B | pop | 1 | 0 | 0 |
| C | pop-and-push-one | 1 | 0 | 1 |
| D | pop-and-push-two | 1 | 1 | 0 |
| E | push | 1 | 1 | 1 |

**0208458**

CLAIMS

1.  A data stack (110;10) for data words, comprising a shift
register (124;12) having at one end an input terminal (114;12a) and
an output terminal (116;12b) at the other end characterised in that
the input terminal constitutes an input terminal of the stack for
receiving input words in bit-serial form, the output terminal
constitutes in output terminal of the stack for providing output
words in bit-serial form, and by the stack  further comprising bulk
storage means (118;14,16,18) operable to store input words
transferred from the shift register (124;12) and to provide stored
words for transfer to the shift register (124;12) for output, and
control means (122;30,32,34,36,44) operable so to control data
transfer as to provide words for output sequentially in the reverse
of the order in which they were read in, and to provide the bits of
each word for output in the same order as they were read in.

2.  A stack according to claim 1, characterised by comprising a
plurality of shift registers (124,126) each having an input terminal
(114) at one end constituting an input terminal of the stack and an
output terminal (116) at the other end constituting an output
terminal of the stack, the control means (122) being operable to
transfer data between the bulk storage means (118) and any of the
shift registers.

3.  A stack according to any preceding claim, characterised in that
the shift register or registers (124,126) are connected to the bulk
storage means (118) by a plurality of data pathways (132), whereby
data may be transferred in parallel between the registers and the
bulk storage means.

4.  A stack according to any preceding claim, characterised by
comprising data shifting means (120) operable to produce a chosen
shift of the significance of the bits of a word being transferred
between the shift register or registers (124,126) and the bulk
storage means (118).

**0208458**

5.   A stack according to claim 4, characterised by comprising a bus (132) having a plurality of data pathways connecting the or each shift register (124,126) to the data shifting means (120), and a bus having a plurality of data pathways connecting the data shifting means to the bulk storage means (118), the data shifting means (120) being operable to make connections between selectable combinations of the data pathways.

6.   A stack according to claim 5, characterised in that the data paths in the buses (132) carry data of respective significance and the data shifting means (120) is operable to connect the paths of the buses in order of increasing significance in each bus, the data shifting means connecting the lowest or highest significance path of one of the buses to a selectable path of the other bus.

7.   A stack according to claim 6, characterised in that any pathway of the other bus may be selected.

8.   A stack according to claims 6 or 7, characterised by comprising an overflow register (142) operable to store data arriving at the data shifting means (120) on bus paths not connected to paths of the other bus, for use during a subsequent transfer of data between the shift register or registers (124,126) and the bulk storage means (118).

9.   A stack according to any preceding claim, characterised in that the bulk storage means (118) comprises a RAM.

10.  A stack according to claim 9, characterised in that the control means (122) comprises address pointer means indicating an address in the RAM (118) to be used for data to be transferred, and address changing means for changing the indicated address in response to each data transfer.

11.  A stack according to claim 10, characterised in that the address indicated by the address pointer means is incremented in response to a transfer of data from the or a shift register (124,126) to the RAM (118).                                    0208458

12. A stack according to claim 10 or 11, characterised in that the address indicated by the address pointer means is decremented in response to a transfer of data from the RAM (118) to the or a shift register (124,126).

13. A stack according to any of claims 10, 11 or 12, characterised in that the control means (122) is operable to cause composite words longer than the capacity of the or a shift register (124,126) to be stored as a series of component words of the same length as the said capacity, by transferring the component words to the RAM (118) in sequence according to the significance of the bits of the component words, the address changing means being operable during storage of composite words to increment the indicated address at each transfer of a component word to the RAM (118) and, for output of a composite word, to select the address of the first stored component word and to increment the indicated address at each transfer of a component word from the RAM until all component words of a composite word have been transferred.

14. A stack according to claim 1, characterised in that the bulk storage means comprise a plurality of shift registers (12,14,16,18,20,22,24,26) each having an input terminal (12a,14a,16a,18a,20a,22a,24a,26a) at one end and an output terminal (12b,14b,16b,18b,20b,22b,24b,26b) at the other end, a connection network (38) providing connections between the input and output terminals of all of the shift registers, the control means (30,32,34,36,44) being operable to enable and disable the connections selectively, to allow words to be transferred between registers and thereby to move up or down the stack.

15. A stack according to claim 14, characterised in that the control means (30,32,34,36,44) are operable to connect shift registers (12,14,16,18,20,22,24,26) together to form a stack of composite shift registers having a length which is a multiple of the pre-determined length.

16. A stack according to claim 14 or 15, characterised in that when the stack (10) is to be used for pushing a single word, the control means (30,32,34,36,44) enables connections between the output (12b,14b,16b,18b,20b,22b,24b,26b) of each shift register (14,16,18,20,22,24,26) or composite shift register and the input (14a,16a,18a,20a,22a,24a,26a) of the corresponding shift register (14,16,18,20,22,24,26) or composite shift register below, and between a stack input terminal (46) and the input (12a) of the top shift register (12) or composite shift register, and when the stack is to be used for popping a single word, the control means (30,32,34,36,44) enables connections between the input (14a,16a,18a,20a,22a,24a,26a) of each shift register (14,16,18,20,22,24,26) or composite shift register and the output (14b,16b,18b,20b,22b,24b,26b) of the shift register (14,16,18,20,22,24,26) or composite shift register below, and between the output (12b) of the top shift register (12) or composite shift register and a stack output terminal (48).

17. A stack according to claim 14, 15 or 16, characterised by comprising a plurality of stack input terminals (46), and in that the control means (30,32,34,36,44) are operable to connect the input terminals (12a,14a) of the like plurality of shift registers (12,14) or composite shift registers at the top of the stack to respective stack input terminals.

18. A stack according to any of claims 14 to 17, characterised by comprising a plurality of stack output terminals (48) and wherein the control means (30,32,34,36,44) are operable to connect the output terminals (12b,14b) of the like plurality of shift registers (12,14) or composite shift registers at the top of the stack to respective stack output terminals.

19. A stack according to claims 17 and 18, characterised by comprising two stack input terminals and two stack output terminals, and in that the control means (30,32,34,36,44) are operable to connect the stack input and output terminals (46,48) to the inputs (12a,14a) and outputs (12b,14b), respectively, of the shift registers (12,14) or composite shift registers holding the top and second words in the stack.

20. A stack according to claim 19, characterised in that the control means (30,32,34,36,44) are operable so to connect the inputs (12a,14a,16a,18a,20a,22a,24a,26a)and outputs (12b,14b,16b,18b,20b,22b,24b,26b)of the shift registers (12,14,16,18,20,22,24,26) or composite shift registers that the top two words in the stack may be read out simultaneously while all words in the stack except the top word move up one position in the stack.

21. A stack according to claim 19 or 20, characterised in that the control means (30,32,34,36,44) are operable so to connect the inputs (12a,14a,16a,18a,20a,22a,24a,26a)and outputs (12b,14b,16b,18b,20b,22b,24b,26b)of the shift registers (12,14,16,18,20,22,24,26) or composite shift registers, that the top two words in the stack may be read out simultaneously while a new word is read from a stack input terminal (46) into the shift register (12) or composite shift register holding the top word in the stack, and while all words in the stack except the top two words move up one position in the stack.

22. A stack according to claim 19, 20 or 21, characterised in that the control means (30,32,34,36,44) are operable so to connect the inputs (12a,14a,16a,18a,20a,22a,24a,26a)and outputs (12b,14b,16b,18b,20b,22b,24b,26b)of the shift registers (12,14,16,18,20,22,24,26) or composite shift registers that the top two words in the stack may be read out simultaneously while being replaced by new words read in over respective stack input terminals (46).

23. A stack according to any preceding claim, characterised by comprising a comparator circuit (134,50) associated with a pair of shift registers (124,126;12,14) and responsive to the words stored in those registers to provide an output indicating whether or not those words are equal.

24.  A stack according to claim 23 and any of claims 14 to 22, characterised by comprising a plurality of comparator circuits (50,54,56,58) associated with respective pairs of shift registers.

25.  A stack according to claim 24, and claim 15, characterised in that the connection network (38) includes connections between comparator circuits for the transfer of the results of comparisons, and in that the control means (30,32,34,36,44) are operable to connect comparator circuits (50,54,56,58) together to form a composite comparator circuit associated with a pair of composite shift registers and responsive to the words stored in those composite registers to provide an output indicating whether or not those words are equal.

26.  A stack according to claim 23, 24 or 25, characterised in that each comparator circuit (50,54,56,58) or composite comparator circuit provides an indication as to which word in the associated registers or composite registers has the higher value, if the words are not equal.

27.  A stack according to any preceding claim, characterised by comprising alignment means (80,82,84,86) for aligning bits of equal significance in words stored in the stack in floating point form, the alignment means being operable to shift words in one or both of the top two shift registers (124,126;12,14) or composite shift registers of the stack.

28.  A stack according to claim 27, characterised in that the alignment means (80,82,84,86), in use, subtracts the exponents of one of the words to be aligned from the exponents of the other word, disables one register or composite register selected according to the sign of the subtraction result and shifts the bits of the word in the other register or composite register by a number of places equal to the magnitude of the subtraction result.

29. A stack according to claim 28 and claim 26, characterised in that the alignment means (80,82,84,86) subtracts the smaller exponent from the larger exponent and selects the subtrahend and the register or composite register to be disabled according to the result of a comparison of the exponents performed by a comparator circuit (134,50) or composite comparator circuit.

30. A stack according to any claim insofar as it is dependent on claim 14, characterised in that the connection network (38) comprises data buses and connections between the shift register input or output terminals and the buses, and in that the control means comprises a switching network (30,32,34,36,44) which selectively connects the shift register output or input terminals, respectively, to the buses, and a control bus (40,42) for supplying control signals to the switching networks.

31. A stack according to claim 30, characterised in that the switching network (30,32,34,36,44) comprises a programmable logic array.

32. A stack according to any preceding claim, wherein each shift register (12,14,16,18,20,22,24,26;124,126) has a plurality of outputs at respective points along the length of the shift register, and the control means selects the output to be used, whereby the effective lengths of the shift registers can be set to allow the stack to accommodate words of different pre-determined lengths.

0208458

FIG.1

FIG.2

FIG.3

FIG.5a

FIG.5b

FIG.6a

FIG.6b

| INPUTS | | | OUTPUTS | |
|---|---|---|---|---|
| MODE | DATA | CARRY/ BORROW | DATA | CARRY/ BORROW |
| 0 | 0 | 0 | 0 | 0 |
| 0 | 0 | 1 | 1 | 1 |
| 0 | 1 | 0 | 1 | 0 |
| 0 | 1 | 1 | 0 | 0 |
| 1 | 0 | 0 | 0 | 0 |
| 1 | 0 | 1 | 1 | 0 |
| 1 | 1 | 0 | 1 | 0 |
| 1 | 1 | 1 | 0 | 1 |

MODE = 0 - DECREMENT
MODE = 1 - DECREMENT

*FIG.12*

*FIG.13*

FIG.4a

FIG.4b

FIG.4c

FIG.4d

5/7

0208458

FIG.7

| INPUTS | | | | OUTPUTS | |
|---|---|---|---|---|---|
| E (IN) | S (IN) | T | N | E (OUT) | S (OUT) |
| 0 | 0 | 0 | 0 | 0 | 0 |
| 0 | 0 | 0 | 1 | 0 | 0 |
| 0 | 0 | 1 | 0 | 0 | 0 |
| 0 | 0 | 1 | 1 | 0 | 0 |
| 0 | 1 | 0 | 0 | 0 | 1 |
| 0 | 1 | 0 | 1 | 0 | 1 |
| 0 | 1 | 1 | 0 | 0 | 1 |
| 0 | 1 | 1 | 1 | 0 | 1 |
| 1 | 0 | 0 | 0 | 1 | X |
| 1 | 0 | 0 | 1 | 0 | 0 |
| 1 | 0 | 1 | 0 | 0 | 1 |
| 1 | 0 | 1 | 1 | 1 | X |
| 1 | 1 | 0 | 0 | 1 | X |
| 1 | 1 | 0 | 1 | 0 | 0 |
| 1 | 1 | 1 | 0 | 0 | 1 |
| 1 | 1 | 1 | 1 | 1 | X |

FIG.8

FIG.9

FIG.10

| INPUTS | | OUTPUTS | |
|---|---|---|---|
| DATA | BORROW | DATA | BORROW |
| 0 | 0 | 0 | 0 |
| 0 | 1 | 1 | 1 |
| 1 | 0 | 1 | 0 |
| 1 | 1 | 0 | 0 |

FIG.11